(19) Europäisches Patentamt
European Patent Office
Office européen des brevets

(11) EP 2 465 885 A1

(12) **EUROPEAN PATENT APPLICATION**
published in accordance with Art. 153(4) EPC

(43) Date of publication:
**20.06.2012 Bulletin 2012/25**

(21) Application number: **10808108.4**

(22) Date of filing: **01.07.2010**

(51) Int Cl.:
***C08F 297/00*** *(2006.01)* ***C08F 4/52*** *(2006.01)*

(86) International application number:
**PCT/JP2010/061248**

(87) International publication number:
**WO 2011/018924 (17.02.2011 Gazette 2011/07)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.08.2009 JP 2009188008**

(71) Applicant: **Maruzen Petrochemical Co., Ltd.**
**Chuo-ku**
**Tokyo 104-8502 (JP)**

(72) Inventor: **YOSHIDA Norihiro**
**Ichihara-shi**
**Chiba 290-8503 (JP)**

(74) Representative: **Adam, Holger**
**Kraus & Weisert**
**Patent- und Rechtsanwälte**
**Thomas-Wimmer-Ring 15**
**80539 München (DE)**

# (54) VINYL ETHER-BASED STAR POLYMER AND PROCESS FOR PRODUCTION THEREOF

(57) Provided is a vinyl ether-based star polymer that has arms containing a copolymer of a vinyl ether-based polymer and a oxystyrene-based polymer, and a process for production of the star polymer that is capable of being carried out continuously in a series of steps. The process includes a vinyl ether-based star polymer having arms containing a copolymer of a vinyl ether-based polymer and an oxystyrene-based polymer, and a process for production of the vinyl ether-based star polymer, containing: subjecting a vinyl ether-based monomer to living cationic polymerization in the presence of an initiating species, a Lewis acid that is suitable for cationic polymerization of the vinyl ether-based monomer, and a solvent; then subjecting an oxystyrene-based monomer to living cationic polymerization with a Lewis acid that is suitable for cationic polymerization of the oxystyrene-based monomer added thereto; adding a divinyl compound to introduce a vinyl group to a side chain; and forming a core through intermolecular crosslinking with the vinyl group.

EP 2 465 885 A1

## Description

### Technical Field

The present invention relates to a novel vinyl ether-based star polymer and a process for production thereof. More specifically, it relates to a star polymer having arms containing a vinyl ether-based polymer and an oxystyrene-based polymer which are copolymerized, and a process for production thereof.

### Background Art

Oxystyrene-based polymers including hydroxystyrene are used as a functional polymer material in various fields of industry, and are used in the field of electronic materials, particularly as a raw material for a resin component of a semiconductor resist. The use of the oxystyrene-based polymer as a photosensitive resin component used in an interlayer dielectric film or a surface protective film for a semiconductor device and the like is being studied.

Associated with a semiconductor device in recent years increased in integration degree and size, a resin encapsulation package therefor reduced in thickness and size, and a mounting method therefor shifted to surface mount by reflow soldering, the oxystyrene-based polymer is demanded to have further improved properties and novel physical properties imparted thereto, and there are attempts to introduce the oxystyrene-based polymer into a polymer having a special structure, such as a block polymer and a star polymer.

In particular, a star polymer having both an oxystyrene-based polymer and a vinyl ether-based polymer in the arms thereof can be favorably used as a raw material of a photosensitive resin component suitable for such purposes as an interlayer dielectric film and a surface protective film for a semiconductor device since the star polymer can impart not only low viscosity and fine particle property, which are natures that are peculiar to a star polymer, but also functions that are inherent to the oxystyrene-based polymer and the vinyl ether-based polymer. Furthermore, by making the arms as a di-block copolymer, formation of microscopic phase separation may be facilitated, which may enable creation of a material that is controlled in nano-order level.

Patent Document 1 discloses a synthesis method of a star polymer having arms containing a di-block polymer of a vinyl ether-based polymer and an oxystyrene-based polymer, by a core-first method using a polyfunctional initiating species. However, the number of arms of the star polymer that is obtained by the method is four at most, and thus the star polymer fails to achieve sufficiently the fine particle property and the low viscosity, which depends on the number of arms. Furthermore, there is a problem in complicated production process since the core-first method includes synthesis of the polyfunctional initiating species.

For achieving the properties that are inherent to the star polymer, it is necessary to increase the number of arms, and thus an arm-first method, in which a simple production process may be employed as compared to the core-first method, and a large number of arms can be introduced, is being studied and developed.

For example, Patent Document 2 discloses a process for producing a vinyl ether-based star polymer having stimulus responsive property by subjecting a vinyl ether to living cationic polymerization with an initiating species, such as an alkoxyethyl acetate, and a Lewis acid, and then adding divinyl ether to the resulting living polymer.

Non-patent Document 1 discloses a process for producing an oxystyrene-based star polymer by synthesizing oxystyrene-based arms, and then adding a divinyl compound thereto.

The polymers by these processes have a large number of arms, for example, 10 arms, which are sufficient for achieving the inherent properties of the star polymer, but the arms do not contain both the vinyl ether-based polymer and the oxystyrene-based polymer, and thus the polymers fail to achieve both the developing property inherent to oxystyrene and the flexibility inherent to vinyl ether.

There are problems that even in the case where the process of Patent Document 2 is employed, in which vinyl ether is polymerized, and then oxystyrene is added thereto, the polymerization is hard to proceed to form a block polymer due to the difference of the cationic polymerizability, and even in the case where a block polymer is once synthesized, and then a divinyl ether compound disclosed in Patent Document 2 is added thereto, a core cannot be formed due to the difference of the cationic polymerizability.

Accordingly, there are demands of developments of a star polymer that has a larger number of arms than a star polymer produced by a core-first method and has arms containing vinyl ether and oxystyrene polymerized in a block form, and a simple production process thereof.

### Related Art Documents

#### Patent Documents

Patent Document 1: JP-A-1994-239944
Patent Document 2: JP-A-2005-154497

Non-patent Document

Non-patent Document 1: Macromolecules, vol. 29, pp. 1772-1777 (1996)

Summary of the Invention

Problems to be solved by the Invention

An object of the invention is to provide a vinyl ether-based star polymer that has arms containing a copolymer of a vinyl ether-based polymer and an oxystyrene-based polymer, and a process for production of the star polymer that is capable of being carried out continuously in a series of steps.

Means for solving the Problems

As a result of earnest investigations made by the inventors for solving the problems, it has been found that a novel vinyl ether-based star polymer may be obtained in such a manner that vinyl ether is subjected to living cationic polymerization with an initiating species in the presence of a Lewis acid suitable for vinyl ether, and then oxystyrene is subjected to living cationic polymerization in the presence of a different Lewis acid, thereby synthesizing di-block arms, to which a divinyl compound is added and reacted to form a core of a star polymer, and thus the invention has been completed.

The invention relates to a vinyl ether-based star polymer containing a central core and an arm portion containing a polymer chain extending from the central core, the arm portion containing an oxystyrene-based repeating unit and a vinyl ether-based repeating unit, which are block copolymerized in the order from the central core.

The invention also relates to a vinyl ether-based star polymer containing an arm extending from a central core, the arm containing a copolymer of, in the order from the central core, an oxystyrene-based repeating unit represented by the following general formula (1):

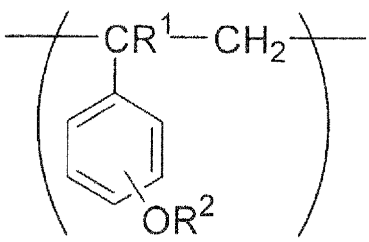

(1)

wherein $R^1$ represents a hydrogen atom or an alkyl group having from 1 to 4 carbon atoms; and $R^2$ represents a hydrogen atom, an alkyl group having from 1 to 4 carbon atoms, an alkoxyalkyl group having from 2 to 6 carbon atoms, an acyl group, an alkoxycarbonyl group, an alkoxycarbonylalkyl group or an alkylsilyl group, and a vinyl ether-based repeating unit represented by the following general formula (2):

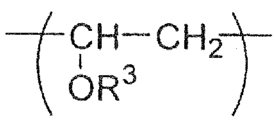

(2)

wherein $R^3$ represents a linear or branched alkyl group having from 1 to 6 carbon atoms, a fluoroalkyl group, which is a linear or branched alkyl group having from 1 to 6 carbon atoms with the whole or a part of hydrogen replaced by fluorine, an alkoxyalkyl group having from 2 to 6 carbon atoms, a cycloalkyl group having from 5 to 10 carbon atoms,

an aryl group or an arylalkyl group represented by the following group (a):

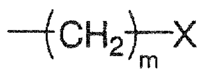

(a)

wherein m represents 0, 1, 2 or 3; and X represents an unsubstituted phenyl group or a phenyl group substituted by one or more of a linear or branched alkyl group having from 1 to 4 carbon atoms, a fluoroalkyl group, which is a linear or branched alkyl group having from 1 to 4 carbon atoms with the whole or a part of hydrogen replaced by fluorine, an alkoxy group having from 1 to 4 carbon atoms or a halogen atom, or an alkoxypolyoxyalkyl group represented by the following group (b):

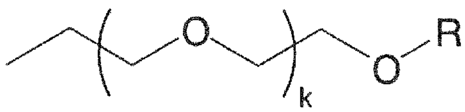

(b)

wherein R represents a methyl group or an ethyl group; and k represents an integer of from 1 to 10.

The invention further relates to a process for production of a vinyl ether-based star polymer, containing: subjecting a vinyl ether-based monomer represented by the general formula (3) :

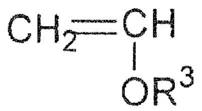

(3)

wherein $R^3$ has the meaning described above, to living cationic polymerization in the presence of an initiating species, a Lewis acid that is suitable for cationic polymerization of the vinyl ether-based monomer, and a solvent; then subjecting an oxystyrene-based monomer represented by the general formula (4):

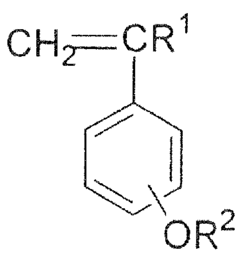

(4)

wherein $R^1$ and $R^2$ each has the meaning described above, to living cationic polymerization with a Lewis acid that is suitable for cationic polymerization of the oxystyrene-based monomer added thereto; adding a divinyl compound to introduce a vinyl group to a side chain; and forming a core through intermolecular crosslinking with the vinyl group.

Advantages of the Invention

The vinyl ether-based star polymer of the invention contains a vinyl ether-based polymer and an oxystyrene-based polymer in the arm containing a polymer chain extending from the central core, and thus the characteristics of the oxystyrene-based polymer and the vinyl ether-based polymer can be imparted thereto in addition to the properties inherent to the star polymer. The arm is in the form of a di-block copolymer, and thus formation of microscopic phase separation may be facilitated, which may enable creation of a material that is controlled in nano-order level.

In the case where the oxystyrene-based polymer is hydroxystyrene, in particular, developing property can be imparted to the star polymer, and thus the star polymer may be favorably used as a raw material of a photosensitive resin component suitable for such purposes as an interlayer dielectric film and a surface protective film for a semiconductor device.
The process for production of a star polymer of the invention can perform the polymerization reaction continuously by one-pot process, and thus the production process and the production equipments may be considerably simplified, which is industrially advantageous.

Mode for carrying out the Invention

The vinyl ether-based star polymer and the process for production thereof of the invention will be described specifically below.
In the star polymer of the invention, the oxystyrene-based repeating unit represented by the general formula (1) may be formed with the oxystyrene-based monomer represented by the general formula (4).
In the definition of $R^1$ in the general formula (1) and the general formula (4), examples of the alkyl group having from 1 to 4 carbon atoms include a methyl group, an ethyl group, a propyl group, an isopropyl group, a n-butyl group, a sec-butyl group, a tert-butyl group and an isobutyl group.
In the definition of $R^2$ in the general formula (1) and the general formula (4), examples of the alkyl group having from 1 to 6 carbon atoms include a methyl group, an ethyl group, a propyl group, an isopropyl group, a n-butyl group, a sec-butyl group, a tert-butyl group, an isobutyl group, a n-amyl group and an isoamyl group, examples of the alkoxyalkyl group having from 2 to 6 carbon atoms include a methoxymethyl group, an ethoxymethyl group, a 1-methoxyethyl group, a 1-ethoxyethyl group, a 1-methoxypropyl group, a 2-tetrahydropyranyl group and a 2-tetrahydrofuranyl group, examples of the acyl group having from 2 to 6 carbon atoms include an acetyl group, a propionyl group and a tert-butylcarbonyl group, examples of the alkoxycarbonyl group having from 2 to 6 carbon atoms include a methoxycarbonyl group, an ethoxycarbonyl group, a propoxycarbonyl group and a tert-butoxycarbonyl group, examples of the alkoxycarbonylalkyl group having from 2 to 6 carbon atoms include a tert-butoxycarbonylmethyl group, and examples of the alkylsilyl group having from 2 to 6 carbon atoms include a trimethylsilyl group and a tert-butyldimethylsilyl group.
These substituents are easily eliminated with an acid or an alkali to provide a hydroxyl group, and thus, the resulting star polymer may be deprotected to provide a star polymer having a hydroxystyrene-based repeating unit in the arms thereof.
Examples of the oxystyrene-based monomer represented by the general formula (4) include a hydroxystyrene compound, such as p-hydroxystyrene, m-hydroxystyrene, o-hydroxystyrene, p-isopropenylphenol, m-isopropenylphenol and o-isopropenylphenol, an alkoxystyrene compound, such as p-methoxystyrene, m-methoxystyrene, p-ethoxystyrene, m-ethoxystyrene, p-propoxystyrene, m-propoxystyrene, p-isopropoxystyrene, m-isopropoxystyrene, p-n-butoxystyrene, m-n-butoxystyrene, p-isobutoxystyrene, m-isobutoxystyrene, p-tert-butoxystyrene and m-tert-butoxystyrene, an alkoxyalkyloxystyrene compound, such as p-methoxymethoxystyrene, m-methoxymethoxystyrene, p-(1-ethoxyethoxy)styrene, m-(1-ethoxyethoxy)styrene, p-(2-tetrahydropyranyl)oxystyrene and m-(2-tetrahydropyranyl)oxystyrene, an alkanoyloxystyrene compound, such as p-acetoxystyrene, m-acetoxystyrene, p-tert-butylcarbonyloxystyrene and m-tert-butylcarbonyloxystyrene, an alkoxycarbonyloxystyrene compound, such as p-methoxycarbonyloxystyrene, m-methoxycarbonyloxystyrene, p-tert-butoxycarbonyloxystyrene and m-tert-butoxycarbonyloxystyrene, an alkoxycarbonylalkyloxystyrene compound, such as p-tert-butoxycarbonylmethyloxystyrene and m-tert-butoxycarbonyloxymethylstyrene, and an alkylsilyloxystyrene compound, such as p-trimethylsilyloxystyrene, m-trimethylsilyloxystyrene, p-tert-butyldimethylsilyloxystyrene and m-tert-butyldimethylsilyloxystyrene.
Among these, p-hydroxystyrene, p-isopropenylphenol, p-tert-butoxystyrene, p-acetoxystyrene and the like are preferably used.
These oxystyrene-based monomers may be used solely or may be used as a combination of two or more kinds thereof.
In the star polymer of the invention, the vinyl ether-based repeating unit represented by the general formula (2) may be formed with the vinyl ether-based monomer represented by the general formula (3).
In the definition of $R^3$ in the general formula (2) and the general formula (3), examples of the linear or branched alkyl group having from 1 to 6 carbon atoms include a methyl group, an ethyl group, a propyl group, an isopropyl group, a n-butyl group, a sec-butyl group, a tert-butyl group, an isobutyl group, a n-amyl group and an isoamyl group, examples of the fluoroalkyl group having from 1 to 6 carbon atoms include a trifluoromethyl group, a pentafluoroethyl group and a 2,2,2-trifluoroethyl group, examples of the alkoxyalkyl group having from 2 to 6 carbon atoms include a methoxymethyl group, an ethoxymethyl group, a 2-methoxyethyl group, 2-ethoxyethyl group, a 2-tetrahydropyranyl group and a 2-tetrahydrofuranyl group, examples of the cycloalkyl group having from 5 to 10 carbon atoms include a cyclopentyl group, a cyclohexyl group, a cycloheptyl group, a cyclooctyl group, a bicyclo[2.2.1]heptyl group, a bicyclo[2.2.2]octyl group, a tricyclo[5.2.1.$0^{2.6}$]decanyl group and an adamantyl group, examples of the aryl group include a phenyl group, a methylphenyl group, an ethylphenyl group, a methoxyphenyl group, an ethoxyphenyl group, a fluorophenyl group and a trifluoromethylphenyl group, and examples of the arylalkyl group include a benzyl group, a methylbenzyl group, an ethylbenzyl group, a methoxybenzyl group, an ethoxybenzyl group, a fluorobenzyl group and a trifluoromethylbenzyl group. Examples of the alkoxypolyoxyalkyl group represented by the group (b) include a 2-(2-methoxyethoxy)ethyl group, a 2-(2-ethoxyethoxy)ethyl group, a 2-(2-(2-methoxyethoxy)ethoxy)ethyl group, a 2-(2-(2-ethoxyethoxy)ethoxy)ethyl group, a 2-(2-(2-(2-methoxyethoxy)ethoxy)ethoxy)ethyl group and a 2-(2-(2-(2-ethoxyethoxy)ethoxy)ethoxy)ethyl group.

Examples of the vinyl ether-based monomer represented by the general formula (3) include an alkyl vinyl ether compound, such as methyl vinyl ether, ethyl vinyl ether, propyl vinyl ether, isopropyl vinyl ether, n-butyl vinyl ether, sec-butyl vinyl ether, tert-butyl vinyl ether, isobutyl vinyl ether, n-amyl vinyl ether and isoamyl vinyl ether, a fluoroalkyl vinyl ether compound, such as trifluoromethyl vinyl ether, pentafluoroethyl vinyl ether and 2,2,2-trifluoroethyl vinyl ether, an alkoxyalkyl vinyl ether compound, such as 2-methoxyethyl vinyl ether, 2-ethoxyethyl vinyl ether, 2-tetrahydropyranyl vinyl ether and 2-tetrahydrofuranyl vinyl ether, a cycloalkyl vinyl ether compound, such as cyclopentyl vinyl ether, cyclohexyl vinyl ether, cycloheptyl vinyl ether, cyclooctyl vinyl ether, 2-bicyclo[2.2.1]heptyl vinyl ether, 2-bicyclo[2.2.2]octyl vinyl ether, 8-tricyclo[5.2.1.0$^{2.6}$]decanyl vinyl ether, 1-adamantyl vinyl ether and 2-adamantyl vinyl ether, an aryl vinyl ether compound, such as phenyl vinyl ether, 4-methylphenyl vinyl ether, 4-trifluoromethylphenyl vinyl ether and 4-fluorophenyl vinyl ether, an arylalkyl vinyl ether compound, such as benzyl vinyl ether and 4-fluorobenzyl vinyl ether, and an alkoxypolyoxyalkyl vinyl ether compound, such as 2-(2-methoxyethoxy)ethyl vinyl ether, 2-(2-ethoxyethoxy)ethyl vinyl ether, 2-(2-(2-methoxyethoxy)ethoxy)ethyl vinyl ether and 2-(2-(2-ethoxyethoxy)ethoxy)ethyl vinyl ether.

In the case where polyvinyl ether is introduced as a soft segment for enhancing the flexibility and impact resistance of the oxystyrene-based polymer, in particular, methyl vinyl ether, ethyl vinyl ether, propyl vinyl ether, isopropyl vinyl ether, n-butyl vinyl ether, sec-butyl vinyl ether, tert-butyl vinyl ether, isobutyl vinyl ether, n-amyl vinyl ether, isoamyl vinyl ether, trifluoromethyl vinyl ether, pentafluoroethyl vinyl ether, 2,2,2-trifluoroethyl vinyl ether, 2-methoxyethyl vinyl ether, 2-ethoxyethyl vinyl ether, 2- (2-methoxyethoxy) ethyl vinyl ether, 2-(2-ethoxyethoxy)ethyl vinyl ether, 2-(2-(2-methoxyethoxy)ethoxy)ethyl vinyl ether, 2-(2-(2-ethoxyethoxy)ethoxy)ethyl vinyl ether and the like are preferably used, and a lower alkyl vinyl ether compound, such as methyl vinyl ether, ethyl vinyl ether, propyl vinyl ether, isopropyl vinyl ether, n-butyl vinyl ether, sec-butyl vinyl ether, tert-butyl vinyl ether, isobutyl vinyl ether, n-amyl vinyl ether and isoamyl vinyl ether, is particularly preferably used.

These vinyl ether-based monomers may be used solely or may be used as a combination of two or more kinds thereof.

The star polymer of the invention may be produced in the following manner. Specifically, the vinyl ether-based monomer represented by the general formula (3) is subjected to living cationic polymerization in the presence of an initiating species, a Lewis acid that is suitable for cationic polymerization of the vinyl ether-based monomer, and a solvent, and then the oxystyrene-based monomer represented by the general formula (4) and a Lewis acid that is suitable for cationic polymerization of the oxystyrene-based monomer are added to the reaction system to perform living cationic polymerization, thereby forming di-block arms. A divinyl compound represented by the general formula (5) is then added to the reaction system, in which the di-block arms have been formed, to polymerize one end of the divinyl compound to the oxystyrene-based polymerizable end group of the di-block arms, thereby forming a polymer having a vinyl group in a side chain thereof. Subsequently, the cationic growing species on the arm is reacted with the vinyl group on the side chain of the different arm to form a core, thereby providing the star polymer.

Examples of the initiating species capable of being used in the invention include a compound forming a proton, such as water, an alcohol and a protonic acid, and a compound forming a carbocation, such as an alkyl halide. A cation donating compound, such as an adduct of vinyl ether and a compound forming a proton, may also be used. Examples of the compound forming a carbocation include a 1-alkoxyethyl acetate, such as 1-isobutoxyethyl acetate. The amount of the initiating species added is not particularly limited, and may be determined depending on the molecular weight of the target vinyl ether-based star polymer.

As the Lewis acid used in the living cationic polymerization reaction, Lewis acids that are ordinarily used in cationic polymerization of a vinyl ether-based monomer and an oxystyrene-based monomer may be used. Specific examples of the Lewis acids that are preferably used include an organometallic halide, such as $Et_{1.5}AlCl_{1.5}$, and a metallic halide, such as $TiC1_4$, $TiBr_4$, $BCl_3$, $BF_3$, $BF_3{\cdot}OEt_2$, $SnCl_2$, $SnCl_4$, $SbCl_5$, $SbF_5$, $WC1_6$, $TaCl_5$, $VC1_5$, $FeCl_3$, $ZnBr_2$, $ZnCl_4$, $AlCl_3$ and $AlBr_3$. These Lewis acids may be used solely or may be used as a combination of two or more kinds thereof.

The vinyl ether-based monomer and the oxystyrene-based monomer are greatly different from each other in reactivity in cationic polymerization, and therefore, it is necessary to use different Lewis acids as the Lewis acid used for polymerization of the vinyl ether-based monomer (which is hereinafter referred to as a Lewis acid (I)) and the Lewis acid used for polymerization of the oxystyrene-based monomer (which is hereinafter referred to as a Lewis acid (II)) corresponding to the reactivity of the monomers. Specifically, the polymerization rates of the vinyl ether-based monomer and the oxystyrene-based monomer depend on the acidity of the Lewis acid, the mutual interaction between the Lewis acid and the stable base, the affinity between the Lewis acid and chlorine, and the like, and it is thus important to select a suitable Lewis acid.

Examples of the Lewis acid (I) include an organoaluminum halide compound or an aluminum halide compound represented by the general formula (6):

$$R^7_qAiY_r \qquad (6)$$

wherein $R^7$ represents a monovalent organic group; Y represents a halogen atom; and q and r represent numbers that satisfy $q + r = 3$, $0 \leq q < 3$, and $0 < r \leq 3$.

In the definition of $R^7$ in the general formula (6), the monovalent organic group is not particularly limited, and examples thereof include an alkyl group, an aryl group, an aralkyl group, an alkenyl group and an alkoxy group. Examples of the halogen atom represented by Y include a chlorine atom, a bromine atom and a fluorine atom, and q and r are preferably such numbers that q is in a range of from 1 to 2, and r is in a range of from 1 to 2.

Examples of the organoaluminum halide compound or the aluminum halide compound represented by the general formula (6) include diethylaluminum chloride, diethylalminum bromide, diisobutylaluminum chloride, methylaluminum sesquichloride, ethylaluminum sesquichloride, ethylaluminum sesquibromide, isobutylaluminum sesquichloride, methylaluminum dichloride, ethylaluminum dichloride, ethylaluminum dibromide, ethylaluminum difluoride, isobutylaluminum dichloride, octylaluminum dichloride, ethoxyaluminum dichloride and phenylaluminum dichloride.

Examples of the Lewis acid (II) include a metallic halide compound or an organometallic halide compound that contains an element other than aluminum, and specific examples thereof include $TiC1_4$, $TiBr_4$, $BCl_3$, $BF_3$, $BF_3 \cdot OEt_2$, $SnCl_2$, $SnCl_4$, $SbCl_5$, $SbF_5$, $WC1_6$, $TaCl_5$, $VCl_5$, $FeCl_3$, $ZnBr_2$ and $ZrCl_4$. Among these, $SnCl_4$, $FeCl_3$ and the like are preferably used as the Lewis acid (II).

For example, the star polymer having arms containing a copolymer of a vinyl ether-based polymer and an oxystyrene-based polymer may be produced in such a manner that vinyl ether is polymerized with $Et_{1.5}AlCl_{1.5}$ used as the Lewis acid, and then $SnCl_4$ is added on polymerization of oxystyrene to accelerate the polymerization rate of the oxystyrene component.

The amount of the Lewis acid used is not particularly limited and may be determined in consideration of the polymerization characteristics and the polymerization concentration of the vinyl ether-based monomer and the oxystyrene-based monomer used. In general, the Lewis acid may be generally used in an amount of from 0.1 to 100% by mol, and preferably from 1 to 50% by mol, based on the monomers.

Examples of the divinyl compound include a divinyl compound represented by the following general formula (5):

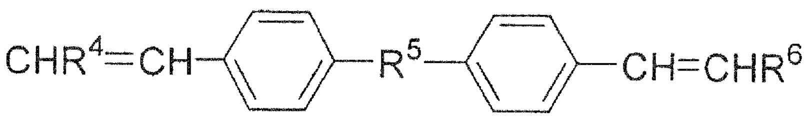

(5)

wherein $R^4$ and $R^6$ each represent a hydrogen atom or a methyl group; and $R^5$ represents a divalent organic group.

Examples of the divalent organic group $R^5$ in the general formula (5) include the following groups.

$$-(CH_2)_p-$$

$$-O-(CH_2)_p-O-$$

$$-(CH_2)_p-R^8-(CH_2)_p-$$

$$-O-\left(CH_2\right)_p-R^8-\left(CH_2\right)_p-O-$$

wherein p represents an integer of 1 or more; and $R^8$ represents -O-, -O-Φ-O-, -O-Φ-C($CH_3$)2-Φ-O- or a cycloalkyl group having 3 or more carbon atoms, wherein Φ represents a phenylene group.

Among the groups represented by the aforementioned formulae, groups containing an alkylene chain, wherein p is 1 to 3, are particularly preferred.

Specific examples of the divinyl compound represented by the formula (5) include bis(4-vinylphenoxy)methane, 1,2-bis(4-vinylphenoxy)ethane, 1,3-bis(4-vinylphenoxy)propane, 4,4'-[2,2'-oxybis(ethan-2,1-diyl)bis(oxy)]bis(vinylbenzene) and bis[[4-[(4-vinylphenoxy)methyl]cyclohexyl]methyl] terephthalate.

Among these, bis(4-vinylphenoxy)methane, 1,2-bis(4-vinylphenoxy)ethane, 1,3-bis(4-vinylphenoxy)propane and the like are preferably used.

The amount of the divinyl compound added may be from 3 to 6 equivalents per one equivalent of the growing species of the living polymer. When the amount thereof added is too small, the crosslinking reaction of the divinyl compound does not proceed sufficiently, thereby resulting in the arms remaining, and when the amount is too large, macromolecules may be formed to make isolation difficult.

Examples of a solvent used in the polymerization reaction include an aromatic hydrocarbon solvent, such as benzene, toluene and xylene, an aliphatic hydrocarbon solvent, such as propane, n-butane, isobutane, n-pentane, n-hexane, n-heptane, n-octane, isooctane, decane, hexadecane and isopentane, a halogenated hydrocarbon solvent, such as methylene chloride, ethylene chloride and carbon tetrachloride, and an ether solvent, such as tetrahydrofuran (THF), dioxane, diethyl ether, dibutyl ether and ethylene glycol diethyl ether. Among these solvents, toluene, methylene chloride and hexane may be preferably used. These solvent may be used solely or as a combination of two or more kinds thereof.

The polymerization reaction specifically performed in such a manner that the initiating species, the solvent and the vinyl ether-based monomer are sequentially placed in a reaction vessel, and then the Lewis acid (I) is added thereto. In this step, vinyl ether-based arms are firstly synthesized. Then, at the time when the conversion of the vinyl ether-based monomer is completed, the oxystyrene-based monomer is placed therein, and the Lewis acid (II) is added to form di-block arms. Finally, the divinyl compound is added to proceed the crosslinking reaction. These steps of polymerization reaction can be carried out continuously in a series of steps in the same reaction vessel.

The polymerization conditions may vary depending on the kinds of the Lewis acids, the initiating species, the monomers, the solvent and the like used, and in general, the polymerization temperature is preferably in a range of from -80 to 150°C, and more preferably in a range of from -78 to 80°C. The polymerization time is generally in a range of from 10 to 250 hours.

The target star polymer may be obtained in such a manner that the polymerization reaction is terminated at a desired polymerization degree by adding a reaction terminating agent, and after removing the catalyst residue, such as the metallic compound, depending on necessity, the polymer is isolated by (1) a method of distilling the volatile components off from the polymer solution, or (2) a method of precipitating the polymer by adding a large amount of poor solvent.

Examples of the reaction terminating agent used include an alcohol, such as methanol, ethanol and propanol, an amine, such as dimethylamine and diethylamine, and a compound that functions as a terminating agent and/or a compound having a function of deactivating the Lewis acid, such as water, aqueous ammonia and a sodium hydroxide aqueous solution.

Examples of the method of removing the metallic compound or the like as the Lewis acid include a method of treating with water or an aqueous solution containing an acid, such as hydrochloric acid, nitric acid or sulfuric acid; a method of treating with an inorganic oxide, such as silica gel, alumina or silica-alumina; and a method of treating with an ion-exchange resin. The method of treating with an ion-exchange resin is most preferred in consideration of the removal efficiency of the metallic compound or the like and the cost. A cation-exchange resin is effective for removing a metallic ion. In the case where the cation-exchange resin has high acidity, which may cause decrease or increase of the molecular weight of the resulting star polymer through hydrolysis and/or crosslinking reaction, a mixed product of a cation-exchange resin and an anion-exchange resin (a mixed bed ion-exchange resin) may be used as the ion-exchange resin.

Examples of the cation-exchange resin include strongly acidic cation-exchange resins, such as Amberlyst 15 dry (trade name), produced by Organo Corporation, and Diaion SK1BH, SK104H, PK208H, PK216H and PK228H (trade names), produced by Mitsubishi Chemical Corporation. Examples of the mixed bed ion-exchange resin include mixed products of a strongly acidic cation-exchange resin and a weakly basic anion-exchange resin, such as Amberlyst MSPS2-1 dry (trade name), produced by Organo Corporation.

In the case where the protective group of the oxystyrene-based unit is deprotected to provide a star polymer having a hydroxystyrene-based polymer in the arms thereof, for example, the reaction may be carried out in a solvent with an acid catalyst, such as hydrochloric acid or sulfuric acid, at a reaction temperature of from 50 to 150°C for a reaction time of from 1 to 30 hours to eliminate the protective group, thereby providing a hydroxystyrene-based polymer.

Example

The invention will be described in more detail with reference to the following examples, but the invention is not limited to the examples. The star polymers obtained in the examples were evaluated for properties in the following manners.

(1) Weight Average Molecular Weight (Mw), Number Average Molecular Weight (Mn) and Molecular Weight Distribution (Mw/Mn)

These were obtained by a gel permeation chromatography (GPC) method with the standard polystyrene calibration curve (RI detector, columns: LF-804 x 3, produced by Shodex, eluent: tetrahydrofuran).

(2) Absolute Molecular Weight (Mwabsolute)

The absolute molecular weight was obtained by a gel permeation chromatography (GPC)-viscosity method (RI detector, viscometer, columns: KF-800D + KF-805L x 2, produced by Shodex, eluent: tetrahydrofuran).

(3) Number of Arms (f)

The number of arms (f) was calculated according the following equation:

$$f = A \times B / C$$

wherein

A: weight fraction of arm-forming monomer
B: Mwabsolute (star)
C: Mw (arms)

(4) Particle Diameter

The particle diameter was analyzed by dynamic light scattering (DLS) (produced by Otsuka Electronics Co., Ltd.) (eluent: tetrahydrofuran).

Example 1

Production of ethyl vinyl ether-p-tert-butoxystyrene copolymer-based star polymer (1)

A glass vessel equipped with a three-way valve was provided, and after replacing the interior thereof with argon, the glass vessel was heated in an argon atmosphere to remove adsorbed water inside the vessel. 0.34 mole (hereinafter abbreviated as M) of ethyl vinyl ether (hereinafter referred to as EVE), 3.4 M of ethyl acetate, 13.6 millimole (hereinafter abbreviated as mM) of 1-isobutoxyethyl acetate and 22.2 mL of toluene were placed in the vessel, and cooled. After the temperature in the system reached -10°C, a toluene solution of $Et_{1.5}AlCl_{1.5}$ (15. 6 mM) was added thereto to initiate polymerization. At the time when the conversion of EVE was completed, a small amount of the reaction solution was collected, and after the reaction therein was terminated with methanol containing sodium methoxide, was analyzed by gel permeation chromatography (hereinafter abbreviated as GPC). Thus, the resulting EVE polymer was a monodisperse polymer with Mw = 2,000 and Mw/Mn = 1.19.

0.30 M of p-tert-butoxystyrene (hereinafter referred to as PTBOS) was then added to the reaction solution, and a toluene solution of $SnCl_4$ (45 mM) was added, followed by further continuing the reaction at a reaction temperature of -10°C. At the time when the conversion of PTBOS was completed, a small amount of the reaction solution was collected, and after the reaction therein was terminated with methanol containing sodium methoxide, was analyzed by GPC. Thus,

the resulting EVE-PTBOS block copolymer was a monodisperse polymer with Mw = 4,400 and Mw/Mn = 1.12.

A liquid obtained by dispersing 48 mM of 1,3-bis(4-vinylphenoxy)propane (hereinafter referred to as VPP) in 0. 73 M of ethyl acetate was then added to the reaction solution, and a toluene solution of $SnCl_4$ (72 mM) was added, followed by further continuing the reaction at a reaction temperature of -10°C. The conversion of the vinyl group of VPP was monitored intermittently in time using GPC, and at the time when the GPC chart became constant, the reaction was terminated by adding methanol to the reaction system.

25% by weight of Amberlyst MSPS2-1 dry (trade name, produced by Organo Corporation) was added to the reaction solution, and after stirring at room temperature for 2 hours, the reaction solution was passed through a filter of 1 μm. The solution was concentrated under reduced pressure with an evaporator, thereby providing an ethyl vinyl ether-p-tert-butoxystyrene-based star polymer. The polymer thus obtained had Mw = 34,800 and Mw/Mn = 1.21. The polymer thus obtained was measured for absolute molecular weight by GPC-LALLS, and thus Mwabsolute thereof was 88, 000, based on which the number of arms was 17, and the particle diameter was 10.1 nm. It is apparent that the polymer thus obtained has a compact structure with many branches since the normal weight average molecular weight is smaller than the absolute molecular weight by GPC-LALLS. Furthermore, it is apparent that the molecules are not associated from the analysis of particle diameter. Accordingly, the polymer thus obtained is a star polymer.

Example 2

Production of ethyl vinyl ether-p-tert-butoxystyrene copolymer-based star polymer (2)

A glass vessel equipped with a three-way valve was provided, and after replacing the interior thereof with argon, the glass vessel was heated in an argon atmosphere to remove adsorbed water inside the vessel. 0.15 M of EVE, 3.0 M of ethyl acetate, 12 mM of 1--isobutoxyethyl acetate and 22.2 mL of toluene were placed in the vessel, and cooled. After the temperature in the system reached -10°C, a toluene solution of $Et_{1.5}AlCl_{1.5}$ (14 mM) was added thereto to initiate polymerization. At the time when the conversion of EVE was completed, a small amount of the reaction solution was collected, and after the reaction therein was terminated with methanol containing sodium methoxide, was analyzed by GPC. Thus, the resulting EVE polymer was a monodisperse polymer with Mw = 1,300 and Mw/Mn = 1.12.

0.13 M of PTBOS was then added to the reaction solution, and a toluene solution of $SnCl_4$ (40 mM) was added, followed by further continuing the reaction at a reaction temperature of -10°C. At the time when the conversion of PTBOS was completed, a small amount of the reaction solution was collected, and after the reaction therein was terminated with methanol containing sodium methoxide, was analyzed by GPC. Thus, the resulting EVE-PTBOS block copolymer was a monodisperse polymer with Mw = 3,000 and Mw/Mn = 1.13.

A liquid obtained by dispersing 42 mM of VPP in 0.64 M of ethyl acetate was then added to the reaction solution, and a toluene solution of $SnCl_4$ (63 mM) was added, followed by further continuing the reaction at a reaction temperature of -10°C. The conversion of the vinyl group of VPP was monitored intermittently in time using GPC, and at the time when the GPC chart became constant, the reaction was terminated by adding methanol to the reaction system, thereby providing the target star polymer. The star polymer thus obtained was a monodisperse polymer with Mw = 34, 500 and Mw/Mn = 1.36.

Example 3

Production of ethyl vinyl ether-p-isopropenylphenol copolymer-based star polymer (1)

A glass vessel equipped with a three-way valve was provided, and after replacing the interior thereof with argon, the glass vessel was heated in an argon atmosphere to remove adsorbed water inside the vessel. 0.37 M of EVE, 3.6 M of ethyl acetate, 14.5 mM of 1-isobutoxyethyl acetate and 22.2 mL of toluene were placed in the vessel, and cooled. After the temperature in the system reached -10°C, a toluene solution of $Et_{1.5}AlCl_{1.5}$ (16.7 mM) was added thereto to initiate polymerization. At the time when the conversion of EVE was completed, a small amount of the reaction solution was collected, and after the reaction therein was terminated with methanol containing sodium methoxide, was analyzed by GPC. Thus, the resulting EVE polymer was a monodisperse polymer with Mw = 2,500 and Mw/Mn = 1.20.

A liquid obtained by dissolving 28.5 mM of p-isopropenylphenol (hereinafter referred to as PIPP) in 8.6 mM of ethyl acetate was then added to the reaction solution, and a toluene solution of $SnC1_4$ (91 mM) was added, followed by further continuing the reaction at a reaction temperature of -10°C. At the time when the conversion of PIPP was completed, a small amount of the reaction solution was collected, and after the reaction therein was terminated with methanol containing sodium methoxide, was analyzed by GPC. Thus, the resulting EVE-PIPP block copolymer was a monodisperse polymer with Mw = 4,100 and Mw/Mn = 1.31.

A liquid obtained by dispersing 51 mM of VPP in 0.78 M of ethyl acetate was then added to the reaction solution, and a toluene solution of $SnCl_4$ (91 mM) was added, followed by further continuing the reaction at a reaction temperature

of -10°C. The conversion of the vinyl group of VPP was monitored intermittently in time using GPC, and at the time when the GPC chart became constant, the reaction was terminated by adding methanol to the reaction system, thereby providing the target star polymer. The star polymer thus obtained was a monodisperse polymer with Mw = 54, 100 and Mw/Mn = 1.43.

Example 4

Production of 2-methoxyethyl vinyl ether-p-isopropenylphenol copolymer-based star polymer

glass vessel equipped with a three-way valve was provided, and after replacing the interior thereof with argon, the glass vessel was heated in an argon atmosphere to remove adsorbed water inside the vessel. 0.24 M of 2-methoxyethyl vinyl ether (hereinafter referred to as MOVE), 2.4 M of ethyl acetate, 9.6 mM of 1-isobutoxyethyl acetate and 10.0 mL of toluene were placed in the vessel, and cooled. After the temperature in the system reached -10°C, a toluene solution of $Et_{1.5}AlCl_{1.5}$ (13.2 mM) was added thereto to initiate polymerization. At the time when the conversion of MOVE was completed, a small amount of the reaction solution was collected, and after the reaction therein was terminated with methanol containing sodium methoxide, was analyzed by GPC. Thus, the resulting MOVE polymer was a monodisperse polymer with Mw = 2,500 and Mw/Mn = 1.19.

A liquid obtained by dissolving 18.8 mM of PIPP in 60 mM of ethyl acetate was then added to the reaction solution, and 9.92 M of tetrahydrofuran and an ethyl acetate solution of $FeCl_3$ (113 mM) were added, followed by further continuing the reaction at a reaction temperature of -10°C. At the time when the conversion of PIPP was completed, a small amount of the reaction solution was collected, and after the reaction therein was terminated with methanol containing sodium methoxide, was analyzed by GPC. Thus, the resulting EVE-PIPP block copolymer was a monodisperse polymer with Mw = 4,500 and Mw/Mn = 1.36.

A liquid obtained by dispersing 34 mM of VPP in 0.52 M of ethyl acetate was then added to the reaction solution, followed by further continuing the reaction at a reaction temperature of -10°C. The conversion of the vinyl group of VPP was monitored intermittently in time using GPC, and at the time when the GPC chart became constant, the reaction was terminated by adding methanol to the reaction system, thereby providing the target star polymer. The star polymer thus obtained was a monodisperse polymer with Mw = 31,100 and Mw/Mn = 1.74.

Comparative Example 1

Production of ethyl vinyl ether-p-tert-butoxystyrene copolymer-based star polymer (1) (with increased amount of divinyl compound)

glass vessel equipped with a three-way valve was provided, and after replacing the interior thereof with argon, the glass vessel was heated in an argon atmosphere to remove adsorbed water inside the vessel. 0.14 M of EVE, 3.2 M of ethyl acetate, 12.7 mM of 1-isobutoxyethyl acetate and 11.1 mL of toluene were placed in the vessel, and cooled. After the temperature in the system reached -10°C, a toluene solution of $Et_{1.5}AlCl_{1.5}$ (14 mM) was added thereto to initiate polymerization. At the time when the conversion of EVE was completed, a small amount of the reaction solution was collected, and after the reaction therein was terminated with methanol containing sodium methoxide, was analyzed by GPC. Thus, the resulting EVE polymer was a monodisperse polymer with Mw = 1,000 and Mw/Mn = 1.14.

0.14 M of PTBOS was then added to the reaction solution, and a toluene solution of $SnCl_4$ (31 mM) was added, followed by further continuing the reaction at a reaction temperature of -10°C. At the time when the conversion of PTBOS was completed, a small amount of the reaction solution was collected, and after the reaction therein was terminated with methanol containing sodium methoxide, was analyzed by GPC. Thus, the resulting EVE-PTBOS block copolymer was a monodisperse polymer with Mw = 2,100 and Mw/Mn = 1.13.

A liquid obtained by dispersing 89 mM of VPP in 1.37 M of ethyl acetate was then added to the reaction solution, and a toluene solution of $SnCl_4$ (31 mM) was added, followed by further continuing the reaction at a reaction temperature of -10°C. The conversion of the vinyl group of VPP was monitored intermittently in time using GPC, and at the time when the GPC chart became constant, the reaction was terminated by adding methanol to the reaction system. The (star) polymer thus obtained was a polydisperse polymer with Mw = 106,000 and Mw/Mn = 2.56.

Comparative Example 2

Production of ethyl vinyl ether-p-tert-butoxystyrene copolymer-based star polymer (2) (with decreased amount of divinyl compound)

A glass vessel equipped with a three-way valve was provided, and after replacing the interior thereof with argon,

the glass vessel was heated in an argon atmosphere to remove adsorbed water inside the vessel. 0.15 M of EVE, 3.3 M of ethyl acetate, 13 mM of 1-isobutoxyethyl acetate and 22.2 mL of toluene were placed in the vessel, and cooled. After the temperature in the system reached -10°C, a toluene solution of $Et_{1.5}AlCl_{1\cdot5}$ (14.8 mM) was added thereto to initiate polymerization. At the time when the conversion of EVE was completed, a small amount of the reaction solution was collected, and after the reaction therein was terminated with methanol containing sodium methoxide, was analyzed by GPC. Thus, the resulting EVE polymer was a monodisperse polymer with Mw = 1,100 and Mw/Mn = 1.13.

0.15 M of PTBOS was then added to the reaction solution, and a toluene solution of $SnC1_4$ (51 mM) was added, followed by further continuing the reaction at a reaction temperature of -10°C. At the time when the conversion of PTBOS was completed, a small amount of the reaction solution was collected, and after the reaction therein was terminated with methanol containing sodium methoxide, was analyzed by GPC. Thus, the resulting EVE-PTBOS block copolymer was a monodisperse polymer with Mw = 2,700 and Mw/Mn = 1.20.

A liquid obtained by dispersing 25 mM of VPP in 0.5 M of ethyl acetate was then added to the reaction solution, and a toluene solution of $SnCl_4$ (17 mM) was added, followed by further continuing the reaction at a reaction temperature of -10°C. The conversion of the vinyl group of VPP was monitored intermittently in time using GPC, and at the time when the GPC chart became constant, the reaction was terminated by adding methanol to the reaction system. In the GPC chart, however, the peak of the EVE-PTBOS block copolymer did not disappear, and thus a mixture of a star polymer and an uncrosslinked block copolymer was obtained.

Industrial Applicability

The vinyl ether-based star polymer of the invention contains a vinyl ether-based polymer and an oxystyrene-based polymer in the form of a di-block copolymer in the arms containing polymer chains extending from the central core, and therefore, has the characteristics of the oxystyrene-based polymer and the vinyl ether-based polymer, in addition to the properties inherent to the star polymer. Furthermore, the arms contain the di-block copolymer, and therefore, formation of microscopic phase separation may be facilitated, which may enable creation of a material that is controlled in nano-order level.

In the case where hydroxystyrene is selected as the oxystyrene-based polymer, in particular, developing property can be imparted to the vinyl ether-based star polymer of the invention, and thus the star polymer may be favorably used as a raw material of a photosensitive resin component suitable for such purposes as an interlayer dielectric film and a surface protective film for a semiconductor device.

The process for production of a star polymer of the invention can perform the polymerization reaction continuously by one-pot process, and thus the production process and the production equipments may be considerably simplified, which is industrially advantageous.

## Claims

1. A vinyl ether-based star polymer comprising a central core and an arm portion containing a polymer chain extending from the central core, the arm portion containing an oxystyrene-based repeating unit and a vinyl ether-based repeating unit, which are block copolymerized in the order from the central core.

2. A vinyl ether-based star polymer comprising an arm extending from a central core, the arm containing a copolymer of, in the order from the central core, an oxystyrene-based repeating unit represented by the following general formula (1):

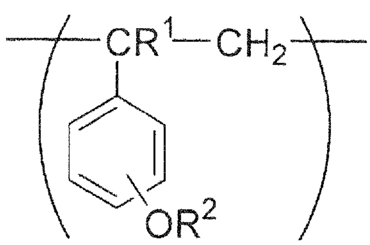

(1)

wherein $R^1$ represents a hydrogen atom or an alkyl group having from 1 to 4 carbon atoms; and $R^2$ represents a hydrogen atom, an alkyl group having from 1 to 4 carbon atoms, an alkoxyalkyl group having from 2 to 6 carbon

atoms, an acyl group, an alkoxycarbonyl group, an alkoxycarbonylalkyl group or an alkylsilyl group, and a vinyl ether-based repeating unit represented by the following general formula (2):

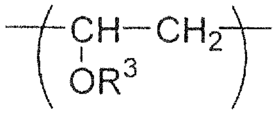
(2)

wherein $R^3$ represents a linear or branched alkyl group having from 1 to 6 carbon atoms, a fluoroalkyl group, which is a linear or branched alkyl group having from 1 to 6 carbon atoms with the whole or a part of hydrogen replaced by fluorine, an alkoxyalkyl group having from 2 to 6 carbon atoms, a cycloalkyl group having from 5 to 10 carbon atoms, an aryl group or an arylalkyl group represented by the following group (a):

$$-(CH_2)_m-X \quad (a)$$

wherein m represents 0, 1, 2 or 3; and X represents an unsubstituted phenyl group or a phenyl group substituted by one or more of a linear or branched alkyl group having from 1 to 4 carbon atoms, a fluoroalkyl group, which is a linear or branched alkyl group having from 1 to 4 carbon atoms with the whole or a part of hydrogen replaced by fluorine, an alkoxy group having from 1 to 4 carbon atoms or a halogen atom, or an alkoxypolyoxyalkyl group represented by the following group (b):

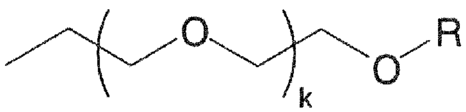
(b)

wherein R represents a methyl group or an ethyl group; and k represents an integer of from 1 to 10.

**3.** A process for production of a vinyl ether-based star polymer, comprising: subjecting a vinyl ether-based monomer represented by the general formula (3):

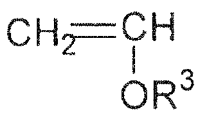
(3)

wherein $R^3$ has the meaning described above, to living cationic polymerization in the presence of an initiating species, a Lewis acid that is suitable for cationic polymerization of the vinyl ether-based monomer, and a solvent; then subjecting an oxystyrene-based monomer represented by the general formula (4):

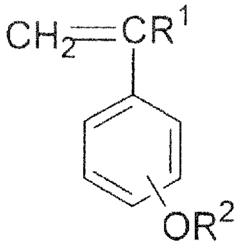

(4)

wherein $R^1$ and $R^2$ each has the meaning described above, to living cationic polymerization with a Lewis acid that is suitable for cationic polymerization of the oxystyrene-based monomer added thereto; adding a divinyl compound to introduce a vinyl group to a side chain; and forming a core through intermolecular crosslinking with the vinyl group.

**4.** The process for production of a vinyl ether-based star polymer according to claim 3, wherein the divinyl compound is represented by the general formula (5) :

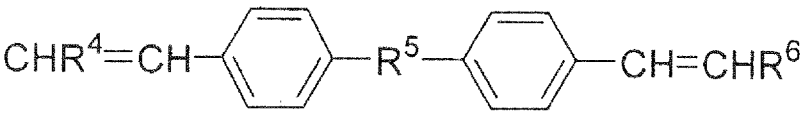

(5)

wherein $R^4$ and $R^6$ each represents a hydrogen atom or a methyl group; and $R^5$ represents a divalent organic group.

**5.** The process for production of a vinyl ether-based star polymer according to claim 3 or 4, wherein an amount of the divinyl compound added is from 3 to 6 equivalents per one equivalent of the arm portion.

**6.** The process for production of a vinyl ether-based star polymer according to any one of claims 3 to 5, wherein the Lewis acid that is suitable for cationic polymerization of the vinyl ether-based monomer is an organoaluminum halide compound or an aluminum halide compound represented by the general formula (6):

$$R^7_qAlY_r \qquad (6)$$

wherein $R^7$ represents a monovalent organic group; Y represents a halogen atom; and q and r represent numbers that satisfy q + r = 3, $0 \leq q < 3$, and $0 < r \leq 3$, and the Lewis acid that is suitable for cationic polymerization of the oxystyrene-based monomer is a metallic halide compound or an organometallic halide compound that contains an element other than aluminum.

**INTERNATIONAL SEARCH REPORT**

International application No. PCT/JP2010/061248

A. CLASSIFICATION OF SUBJECT MATTER
*C08F297/00*(2006.01)i, *C08F4/52*(2006.01)i

According to International Patent Classification (IPC) or to both national classification and IPC

B. FIELDS SEARCHED

Minimum documentation searched (classification system followed by classification symbols)
C08F297/00, C08F4/52

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-139647 A (Nippon Soda Co., Ltd.), 22 May 2001 (22.05.2001), entire text & US 6713564 B1 & EP 1211270 A1 & WO 2001/016198 A1 & DE 60031280 D | 1-6 |
| Y | JP 2002-105153 A (Nippon Soda Co., Ltd.), 10 April 2002 (10.04.2002), claims; paragraph [0001] (Family: none) | 1-6 |
| Y | WO 2009/008252 A1 (Maruzen Petrochemical Co., Ltd.), 15 January 2009 (15.01.2009), paragraphs [0001], [0002], [0030], [0048], [0049] & EP 2186837 A1 & KR 10-2010-0033962 A | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 September, 2010 (06.09.10) | 21 September, 2010 (21.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/061248

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-342327 A (Tosoh Corp.), 03 December 2003 (03.12.2003), claims; paragraph [0001] (Family: none) | 1-6 |
| A | JP 2000-198825 A (Kaneka Corp.), 18 July 2000 (18.07.2000), claims; paragraphs [0181] to [0183] & US 2003/0166786 A1 & EP 992519 A1 & WO 1999/055751 A1 & DE 69921265 D | 1-6 |
| A | JP 7-508299 A (Shell International Research Maatschappij B.V.), 14 September 1995 (14.09.1995), entire text & US 5247026 A & US 5428114 A & US 5247026 A & EP 646138 A & WO 1994/000499 A1 | 1-6 |
| P,A | WO 2010/050357 A1 (JSR Corp.), 06 May 2010 (06.05.2010), entire text & JP 2010-102271 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6239944 A
- JP 2005154497 A


### Non-patent literature cited in the description


- *Macromolecules,* 1996, vol. 29, 1772-1777